(19) **Europäisches Patentamt / European Patent Office / Office européen des brevets**

(11) **EP 4 761 130 A1**

(12) **EUROPEAN PATENT APPLICATION**
published in accordance with Art. 153(4) EPC

(43) Date of publication:
**17.06.2026  Bulletin 2026/25**

(21) Application number: **24852409.2**

(22) Date of filing: **09.08.2024**

(51) International Patent Classification (IPC):
**H04B 7/06** (2006.01)   **H04W 52/02** (2009.01)
**H04B 7/08** (2006.01)   **H04W 72/232** (2023.01)
**H04L 5/00** (2006.01)

(52) Cooperative Patent Classification (CPC):
**H04B 7/06; H04B 7/08; H04L 5/00; H04W 52/02; H04W 72/232**

(86) International application number:
**PCT/KR2024/011908**

(87) International publication number:
**WO 2025/034056 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023  KR 20230104397**

(71) Applicant: **LG Electronics Inc.**
**Yeongdeungpo-gu**
**Seoul 07336 (KR)**

(72) Inventors:
- **MYUNG, Sechang**
  **Seoul 06772 (KR)**
- **LEE, Youngdae**
  **Seoul 06772 (KR)**
- **YANG, Suckchel**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING SIGNALS IN WIRELESS COMMUNICATION SYSTEM**

(57)    A method and device for transmitting and receiving signals in a wireless communication system disclosed in the present specification transmit and receive a CSI report. A CSI report configuration for the CSI report includes a plurality of sub-configurations. If DCI for triggering the CSI report does not include any information about the sub-configurations, the CSI report includes CSI information about all of the sub-configurations.

【FIG. 4】

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

An object of the present disclosure is to provide a signal transmission and reception method and an apparatus therefor for efficiently transmitting and receiving a reference signal and a measurement report in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes receiving a channel state information (CSI) report configuration, receiving downlink control information (DCI) for triggering a CSI report, receiving a CSI-reference signal (CSI-RS) on a CSI-RS resource based on the CSI report configuration, and transmitting the CSI report triggered by the DCI based on a measurement result for the CSI-RS, wherein the CSI report configuration includes sub-configurations, based on the DCI including information corresponding to one or more of the sub-configurations, the CSI report includes CSI information for the one or more sub-configurations, and based on the DCI not including information corresponding to any of the sub-configurations, the CSI report includes CSI information for all of the sub-configurations.

According to another aspect of the present disclosure, a method of transmitting and receiving a signal by a base station (BS) in a wireless communication system includes transmitting a channel state information (CSI) report configuration, transmitting downlink control information (DCI) for triggering a CSI report, transmitting a CSI-reference signal (CSI-RS) on a CSI-RS resource based on the CSI report configuration, and receiving the CSI report triggered by the DCI based on a measurement result for the CSI-RS, wherein the CSI report configuration includes sub-configurations, based on the DCI including information corresponding to one or more of the sub-configurations, the CSI report includes CSI information for the one or more sub-configurations, and based on the DCI not including information corresponding to any of the sub-configurations, the CSI report includes CSI information for all of the sub-configurations.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, when a reference signal and a measurement report are transmitted and received between communication devices, there is an advantage in that more efficient signal transmission and reception may be performed through an operation differentiated from the conventional case.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is a diagram illustrating methods for transmitting and receiving a signal according to the embodiments of the present disclosure.
FIGS. 5 to 8 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE- advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

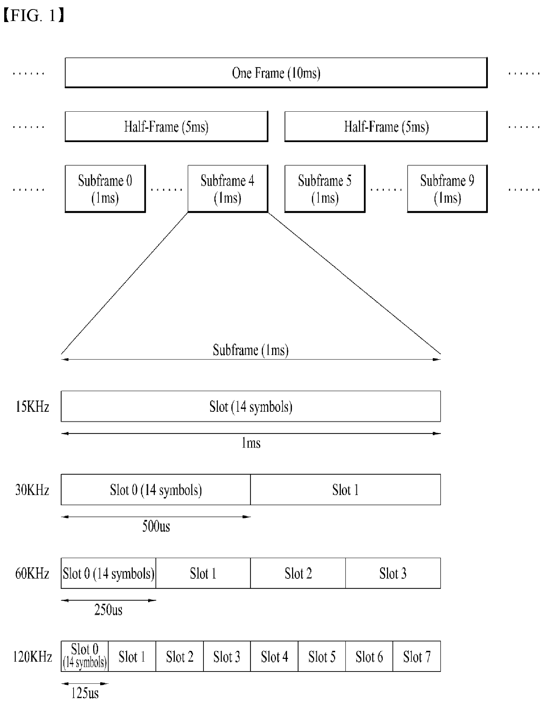

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15 *2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 51600MHz | 60, 120, 240kHz |

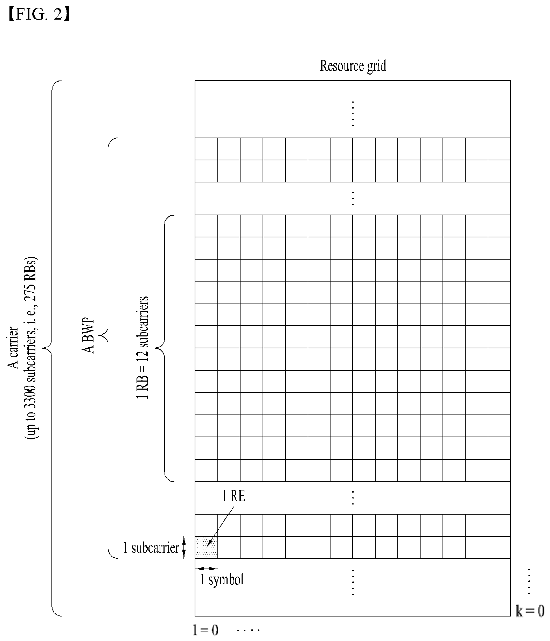

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel includes a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

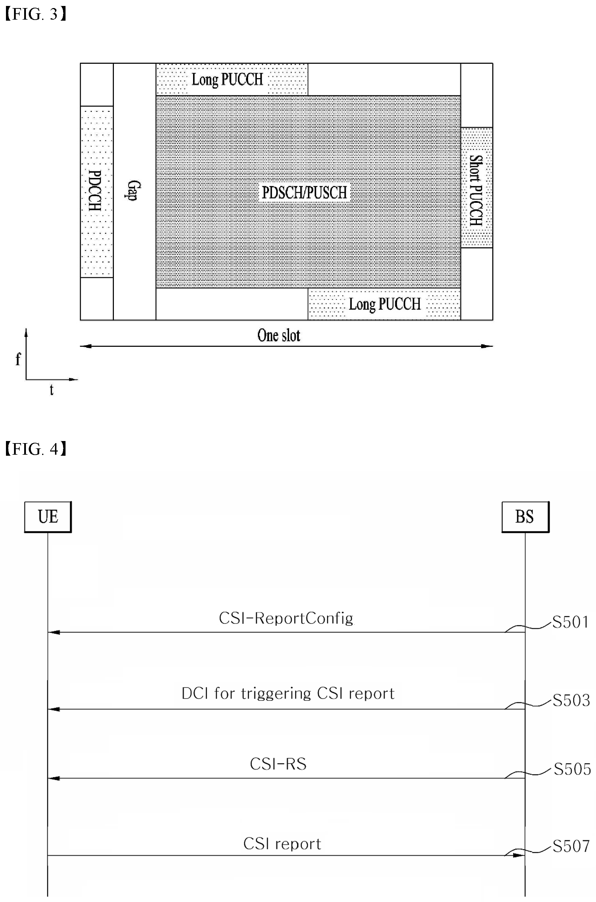

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

## 1. Configuration of CSI contents for multi-CSI report

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy conservation of BSs may contribute to building eco-friendly networks by reducing carbon emissions and reducing the operational expenditure (OPEX) of communication service providers, and thus has been considered as an important issue in wireless communication systems, including 3GPP. In particular, as the introduction of 5G communications requires higher transmission rates, BSs need to include more antennas and provide services through wider bandwidths and frequency bands. This has resulted in energy costs of BSs reaching as high as 20 % of total OPEX, according to recent studies. Due to this increased interest in energy savings of BSs, a new study item called "study on network energy savings" is approved in 3GPP NR release 18.

In detail, in the corresponding item, to improve the energy saving capability of the BS in terms of transmission and reception, the following enhancement techniques have been considered.

- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information.

The present specification proposes a configuration of multiple CSI information when multiple CSI information is transmitted and received in a single CSI report according to the number of APs or power offset adjustment for energy saving of BSs.

The present specification mainly considers a scenario in which a BS receives CSI reports for multiple antenna ports (APs) and/or multiple power offsets at once, and obtains network energy saving (NES) gain by controlling the number of APs to use or controlling transmit power when transmitting downlink signals/channels to a UE. The BS may reduce the number of APs or reduce the transmit power based on the reported CSI. Therefore, energy saving (ES) gain may be obtained by controlling unnecessary portions of antenna element (AE) and/or transmission power. For example, the BS configures the UE to transmit CSI information assuming multiple APs (e.g., 64 APs and 32 APs) and/or CSI information for multiple CSI-RS to PDSCH power offset values (e.g., -3 dB and 0 dB) in a single CSI report for each of one CSI-RS resource or multiple CSI-RS resources within a CSI-RS resource set. The BS may reduce power consumption by determining the optimal number of APs and PDSCH transmit power/MCS based on the information in this CSI report. Therefore, the present specification proposes a CSI-RS resource and a CSI-RS resource set configuration method for reporting on multiple APs and/or multiple power offset values. A method of configuring a CSI report is proposed when CSI information for multiple APs and/or multiple power offset values is transmitted through a single CSI report.

The power offset according to the conventional NR system may mean 'powerControlOffset', an RRC parameter that indicates the power offset value between the PDSCH RE and the non-zero power (NZP) CSI-RS resource element (CSI-RS RE) (see Table 4).

Hereinafter, in the present disclosure, NAP is an abbreviation for 'number of antenna ports', and PCO is an abbreviation for 'power control offset' (i.e., powerControlOffset). In this case, PCO may mean 'powerControlOffset', which is an RRC parameter for the power offset value between PDSCH RE and non-zero power (NZP) CSI-RS resource element (RE). Alternatively, PCO may mean 'powerControlOffsetSS', an RRC parameter for a ratio between NZP CSI-RS energy per resource element (EPRE) to synchronization signal/physical broadcast channel (SS/PBCH) block. In the former case, the PDSCH power may be adjusted based on the CSI-RS power, and in the latter case, the CSI-RS power may be adjusted based on the SSB power.

The UE may know synchronization signal/physical broadcast channel block (SSB) transmission power of the serving BS through the RRC parameter ss-PBCH-BlockPower. The UE may know the CSI-RS transmission power (per CSI-RS resource) of the serving BS through the RRC parameter powerControlOffsetSS. The BS may adjust the transmit power of the PDSCH or adjust the MCS based on the CQI in the CSI report of the UE. When a UE receives a CSI-RS transmitted by a BS, the UE may calculate and report a CQI based on the powerControlOffset in the CSI-RS resource configuration, assuming that the PDSCH is power boosted or power reduced. Therefore, the UE calculates and reports CSI assuming that there is a power fluctuation equal to the offset value compared to the power of the CSI-RS actually received. The BS may adjust the power and MCS of the PDSCH appropriately based on the reported information, or schedule the PDSCH using the existing configurations without adjusting the power and MCS (up to gNB implementation). When CSI information corresponding to multiple power offset values and/or the number of APs may be configured and/or instructed to be transmitted through a single CSI report, the BS does not need to perform an RRC reconfiguration with relatively large delay or receive multiple CSI reports for each of multiple power offset values and/or multiple APs to change the power offset values and/or the number of APs within a CSI-RS resource or a set of CSI-RS resources. Instead, the BS receives multiple power offset values and/or CSI reports for APs at once, and uses the received CSI reports to quickly adjust downlink power and/or adjust the number of APs. Through this, energy saving effects of the BS may be achieved. For convenience, the present specification mainly describes a method of configuring CSI-RS resources and CSI-RS resource sets for multiple power offset values, and a method of configuring/reporting CSI for multiple power offset values. However, this may also be applied to the method of configuring CSI-RS resources and CSI-RS resource sets for the number of APs, and the method of configuring/reporting CSI information for the number of APs. CSI information for multiple power offset values and APs may be transmitted together in a single CSI report.

The BS may turn on and off certain spatial elements for the purpose of NES, or adjust the power value for the downlink signal/channel. In the present specification, spatial elements may mean antenna ports or active transceiver chains or panels or transmission and reception points (TRPs). To dynamically apply various NES technologies in the spatial domain and power domain, the BS may link CSI-RS resource sets with different antenna ports for one CSI report configuration (e.g., CSI-ReportConfig) or link multiple power offsets (e.g., powerControlOffset parameter, which is a power offset value between PDSCH and CSI-RS, and powerControlOffsetSS parameter, which is a power offset value between SSB and CSI-RS).

At least one CSI framework among the following methods may be introduced.

- Method#1: Multiple sets of CSI-RS resources are linked for one CMR (abbreviation for channel measurement resource, which may be configured by the resourcesForChannelMeasurement parameter) or one IMR (abbreviation for interference measurement resource, which may be configured by the csi-IM-ResourcesForInterference or nzp-CSI-RS-ResourcesForInterference parameters) within the CSI-ReportConfig configuration. For example, when CSI-RS resource set #1 and CSI-RS resource set #2 are linked for CMR, CSI-RS resources belonging to CSI-RS resource set #1 may be configured with 16 APs, and CSI-RS resources belonging to CSI-RS resource set #2 may be configured with 8 APs.

- Method#2: When there is a set of CSI-RS resources linked to one CMR or one IMR in the CSI-ReportConfig configuration, the corresponding set includes one or more CSI-RS resources with different properties such as the number of APs and/or power offsets. For example, for CSI-RS resource set #1 configured to CMR, CSI-RS resource #1 belonging to CSI-RS resource set #1 may be configured with 16 Aps (or power offset #1 value is configured), and CSI-RS resource #2 belonging to the same set may be configured with 8 APs (or power offset #2 value is configured).

- Method#3: When there is a set of CSI-RS resources linked to one CMR or one IMR in the CSI-ReportConfig configuration, some or all of the CSI-RS resource(s) in the set may be configured with multiple AP numbers and/or power offsets, and the like. For example, for CSI-RS resource set #1 configured to CMR, when CSI-RS resource #1 belonging to CSI-RS resource set #1 is configured to a maximum of 16 APs, CSI reporting utilizing some of the AP(s) may be configured. Alternatively, multiple power offset values may be configured for CSI-RS resource #2 belonging to the same set, and CSI reporting using all or part of the power offsets may be configured.

Under the CSI framework, a CSI reporting method may be defined through at least one of the following options.

- Option#1: CSIs considering multiple AP counts and/or multiple power offset values configured in a single CSI report may all be included in a single CSI report. Alternatively, through the configuration/instruction of the BS, CSIs considering multiple AP counts and/or multiple power offsets (in this case, the AP counts and/or power offsets configured/instructed through the BS may be part of the AP counts and/or power offset values configured in the corresponding CSI report) may be included in a single CSI report.
- Option#2: Even when multiple AP counts and/or multiple power offset values are configured in one CSI report, CSIs considering only a single AP count and/or a single power offset may be included in one CSI report through configuration/instruction of the BS.
- Option#3: Even when multiple AP counts and/or multiple power offset values are configured in one CSI report, CSIs considering some AP counts and/or some power offsets may be included in one CSI report through determination/decision of the UE (using criteria preconfigured or predefined by the BS).

L (>1) sub-configurations may be configured within CSI-ReportConfig. Each sub-configuration may correspond to one spatial domain adaptation pattern or one power domain adaptation pattern.

Here, the spatial domain adaptation pattern may correspond to a specific number of antenna ports (or antenna port on/off pattern) or a specific CSI-RS power value (e.g., the CSI-RS power value determined by the powerControlOffsetSS parameter, which is a power offset value between SSS and CSI-RS, because when some antenna elements corresponding to one antenna port are turned off, it may affect the CSI-RS power value). When Method#2 is applied, if the number of APs (or power value P1) of A1 is configured for CSI-RS index#n1 belonging to a resource set, and the number of APs (or power value P2) of A2 is configured for CSI-RS index#n2 belonging to the same set, sub-configuration index#s1 is linked with CSI-RS#n1, and sub-configuration index#s2 is linked with CSI-RS index#n2, and thus a different spatial domain adaptation pattern may be configured for each sub-configuration. When Method#3 is applied, if the number of APs A1 (or power value P1/P2) is configured for CSI-RS index#n1 belonging to a resource set, the number of APs A1 (or power value P1) is linked to sub-configuration index#s1, and the number of APs A2 (or power value P2) constituting CSI-RS index#n1 is linked to sub-configuration index#s2 (A1 > A2), and thus a spatial domain adaptation pattern may be configured differently for each sub-configuration.

The power domain adaptation pattern may mean that the power offset value (e.g., the power offset value determined by the powerControlOffset parameter, which is the power offset value between PDSCH and CSI-RS, the powerControlOffsetSS parameter, which is the power offset value between SSS and CSI-RS, etc.) changes. When Method#2 is applied, if the power value P1 is configured for CSI-RS index#n1 belonging to the resource set and the power value P2 is configured for the CSI-RS index#n2 belonging to the same set, the sub-configuration index#s1 is linked with the CSI-RS index#n1, and the sub-configuration index#s2 is linked with the CSI-RS index#n2, and thus a different power domain adaptation pattern may be configured for each sub-configuration. When applying Method#3, if power value P1 (power value P2) is configured to CSI-RS index#n1 belonging to a resource set, power value P1 is linked to sub-configuration index#sl1, and power value P2 is linked to sub-configuration index#s2, and thus the power domain adaptation pattern may be configured differently for each sub-configuration. The UE may feed back to the BS a CSI report including CSI corresponding to N (N value greater than or equal to 1 and less than or equal to L) sub-configuration among the L sub-configurations (using one of the methods of Option#1/2/3 above).

In the present disclosure, the BS operating in NES mode for ES may mean, for example, that the BS preconfigures a plurality of OFF periods (DTX periods of the BS) to turn off transmission of a specific DL signal for a specific time period, and dynamically indicates one of the OFF periods to indicate that the corresponding DL signal will not be transmitted for a predefined time period, thereby operating to achieve power consumption reduction of the BS and the UE. The BS operating in NES mode for ES may mean that operations such as BWP switching and dynamic RB adaptation are performed not only in the time domain but also in the frequency domain. The BS operating in in NES mode for ES may mean an operating mode in which the BS does not transmit and/or receive through a specific receiving antenna port of the BS when the antenna port is turned off semi-statically or dynamically in the spatial domain, thereby reducing power consumption of the BS and the UE.

[Method #1] Method of reporting all CSI information corresponding to L (>1) sub-configurations configured **in** the CSI-ReportConfig configuration when SP-CSI reporting or AP-CSI reporting is triggered through DCI, if there is no sub-configuration index corresponding to a trigger state indicated by DCI

There are three types of reporting methods in CSI reporting: periodic (P)-CSI reporting/semi-persistent (SP)-CSI reporting/aperiodic (AP)-CSI reporting. P-CSI reports and SP-CSI reports via PUCCH are transmitted at preconfigured periods and resources. SP-CSI reports and AP-CSI reports through PUSCH are transmitted from resources pre-allocated aperiodically based on DCI or from resources indicated by DCI.

Among these, in the case of SP-CSI reporting and AP-CSI reporting through PUSCH, triggering is performed through the AP-CSI trigger state field in DCI format 0_1, DCI format 0_2, or DCI format 0_3. Through the corresponding field, a specific aperiodic trigger state index configured in CSI-AperiodicTriggerStateList or a codepoint defined in MAC CE is indicated. A bit length of this field is determined by the reportTriggerSize of a RRC parameter CSI-MeasConfig. When the bit length is sufficient, a mapping relationship for each code point within the DCI field may be established through the DCI alone, like the former, and when the bit length is not sufficient, through the MAC CE, like the latter. In this case, a link relationship between an index indicated through an AP-CSI trigger state field in DCI format 0_1, 0_2, or 0_3 and a sub-configuration index (or sub-configuration group index) corresponding to a NAP and/or PCO value configured by CSI-ReportConfig may be preconfigured. When a specific index is indicated through the AP-CSI trigger state field, CSI information corresponding to the linked NAP and/or PCO value may be transmitted in the AP-CSI report.

The BS report multi-CSI information for some N(>1) of the L sub-configurations configured within the CSI-ReportConfig configuration. The BS may need to receive a report containing CSI information for all L units in some cases. In this case, even when a specific trigger state is configured for multi-CSI reporting, the sub-configuration index to be linked (intentionally) may not be configured. When SP-CSI reporting or AP-CSI reporting is triggered through DCI, if there is no sub-configuration index corresponding to the trigger state indicated by the DCI, the UE may report all CSI information corresponding to L (>1) sub-configurations configured in the CSI-ReportConfig configuration.

[Method #2] Method of calculating the bitwidth of the CRI and RI fields when multi-CSI information corresponding to multiple sub-configurations is transmitted through one CSI report

Method #2 may include the following methods.

(1) Method of calculating the CSI-RS resource index (CRI) field width by adding up all floor{$\log_2(X\_n)$} values for each sub-configuration when the number of CSI-RS resources corresponding to sub-configuration index n is X_n. In this case, index n may be triggered/activated sub-configuration indices or configured sub-configuration indices.
(2) Method of calculating the bit width of the CRI field by considering only a single sub-configuration when the number of CSI-RS resources belonging to each sub-configuration is the same and the CRI is not different for each sub-configuration during CRI feedback, which is a common CSI quantity.

The following is a detailed description of (1) and (2) of Method #2.
According to 3GPP TS 38.212, the bit width of the CRI field in a CSI report is calculated according to ceil($\log_2(K_S)$), where Ks is the number of CSI-RS resources. The BS may configure L(>1) sub-reports within the CSI-ReportConfig configuration for multi-CSI reporting. When N(>1) sub-configurations are configured/instructed to be included in one CSI report, the UE may calculate the value Ks by replacing the value with the number of CSI-RSs in the sub-configuration (or the number of CSI-RSs linked with the corresponding sub-configuration).
That is, the bit width of the CRI field may be calculated by considering the number of multiple sub-configurations corresponding to one CSI report configuration. In detail, when the number of CSI-RS resources corresponding to the sub-configuration index n is X_n, the bit width of the CRI field may be calculated by adding all floor{$\log_2(X\_n)$} values. Here, index n may be a sub-configuration index that is activated, triggered, or configured to be included in multi-CSI reporting. When the number of CSI-RS resources belonging to each sub-configuration is the same, when the CRI for each sub-configuration is configured to be commonly reported, when a rule is predefined such that the CRI for each sub-configuration is commonly reported, or when the CRI for each sub-configuration is not different during CRI feedback and is a common CSI quantity, the bit width of the CRI field may be calculated by considering only a single sub-configuration without the need to calculate the CRI bit width for each of the multiple sub-configurations.
The CRI field bit width calculation method may be similarly applied to the bit width of the RI field. When the codebook type (codebookType) is type I, the bit width of RI may be calculated according to min{2, ceil {$\log_2(n\_RI)$}}, and when the codebook type (codebookType) is type II, the bit width of RI may be calculated according to min{2, ceil {$\log(n\_RI)$}}. Here, n_RI is a value of a rank indicator allowed for each codebook type. Thus, the bit width of the CRI field may also be calculated by considering the number of multiple sub-configurations corresponding to one CSI report configuration. In detail, when the number of allowed indicator values corresponding to a sub-configuration index n is Y_n, for Type I, Y_n may be calculated by adding the min{2, floor {$\log_2(Y\_n)$}} values for all sub-configurations, and for Type II Y_n may be calculated by adding the min{1, floor {$\log_2(Y\_n)$}} values for all sub-configurations. Similarly, when the number of CSI-RS resources belonging to each sub-configuration is the same and the RI is not different for each sub-configuration, which is a common CSI quantity, the bit width of the RI field may be calculated by considering only a single sub-configuration.
When N (>1) sub-configuration corresponding CSI information is configured for one CSI report based on CSI-ReportConfig, the configuration method of CSI Part 1 and Part 2 of the legacy CSI report when the existing N=1 CSI report is configured needs to be enhanced or modified. The following are approaches to CSI mapping, priority, and omission rules for CSI with multiple sub-configurations discussed in meeting RAN1#113.

- Approach 1: CSI mapping order for CSI Part 1 or Part 2 and CSI omission/priority rule are performed per CSI report.

  - CSI quantities (such as CRI, RI and CQI when applicable) corresponding to all of N sub-configurations are multiplexed into a single CSI Part 1.

    ◦ Mapping order is determined as:

- e.g., CSI quantity first and sub-configuration index second, or sub-configuration index first and CSI quantity second

  - CSI part 2: Two priority reporting levels can be allocated to a CSI report.

    ◦ Each priority reporting level is determined as:

- e.g., even subbands of all N sub-configurations for the priority reporting level and odd subbands of all N sub-configurations for the second priority reporting level

    ◦ For CSI omission, legacy mechanism can be reused.

For Approach 1, as in the conventional CSI report, the CSI mapping order and CSI priority and omission rules of CSI Part 1 and Part 2 are applied per CSI report unit (per CSI report). When CSIs corresponding to N sub-configurations are configured within a CSI report, CSI quantities (e.g., CRI, RI, or CQI) corresponding to all N sub-configurations are multiplexed into one CSI Part 1 to configure CSI Report #n. As in the past, CSI Part 2 is configured such that even sub-band CSI corresponding to all N sub-configurations within the same CSI report #n is given first priority, and even sub-band CSI is given second priority, according to priority level. When the amount of resources allocated to CSI reporting is not sufficient to include all CSI, blocks with lower priority, i.e. odd sub-band CSI, are omitted first.

- Approach 2: CSI mapping order for CSI Part 1 or Part 2 and CSI omission/priority rule are performed per sub-configuration.

  - CSI part 1: CSI quantities (such as CRI, RI and CQI when applicable) corresponding to each sub-configuration is separately generated then concatenated into a single bit sequence for CSI part 1 for the CSI report configuration.
  - CSI part 2: two priority reporting levels can be allocated to each sub-configuration, i.e., 2 x N priority reporting levels in total.

    ◦ For CSI omission/priority rule, sub-configuration index needs to be additionally considered and $Pri_{iCSI}(y,k,c,s)$ $Pri_{iCSI}(y,k,c,s)$ in 214 specification can be modified, as follows:
      ▪

$$Pri_{iCSI}(y,k,c,s,q) = 2 \cdot q_{max} \cdot N_{cells} \cdot M_s \cdot y + q_{max} \cdot N_{cells} \cdot M_s \cdot k + q_{max} \cdot M_s \cdot c + q_{max} \cdot s + q$$

    where q is the sub-configuration index and $q_{max}$ $q_{max}$ is the maximum number of sub-configuration indexes in a CSI report configuration.

For Approach 2 (per sub-configuration), the CSI field mapping order and CSI omission/priority rules of CSI Part 1 and Part 2 are applied per sub-configuration. When CSI information corresponding to N sub-configurations is configured within a CSI report, the N pieces of CSI information generated separately for each sub-configuration CSI quantity (e.g., CRI, RI, or CQI) are concatenated into a single bit sequence and multiplexed into CSI Part 1. For CSI Part 2, priority reporting levels may be applied to each sub-configuration, and thus the existing CSI omission/priority rules may be applied to the CSI Part 2 information corresponding to each sub-configuration, becoming 2xN. This means that priorities may be assigned between sub-configurations by reflecting the sub-configuration index in the $Pri_{iCSI}(y, k, c, s)$ formula Pri_iCSI(y,k,c,s) that calculates priorities per CSI report in TS 38.214. Accordingly, omission of CSI information units of sub-configuration units is applicable. In Approach 1 (per CSI report) method, even and odd sub-band CSI information blocks include two blocks corresponding to all N sub-configurations triggered/activated to be included in the CSI report. On the other hand, in the Approach 2 (per sub-configuration) method, even and odd sub-band CSI information per sub-configuration each include one block. Therefore, a total of 2xN blocks are configured, and omission according to priority for each sub-configuration may be applied to each block.

- Approach 3:

- CSI part 1: CSI quantities (such as CRI, RI and CQI when applicable) associated with a reference sub-configuration.

  ∘ A reference sub-configuration, for example, which is the sub-configuration with the largest number of antenna ports based on the corresponding (N1, N2) values.

- CSI part 2: remaining CSI quantities for the reference sub-configuration (e.g., PMI, LI), and (N-1) CSIs for the remaining sub-configurations.

**[Method #3] Method of configuring CSI Part 1 when multi-CSI information corresponding to multiple sub-configurations is transmitted and received through a single CSI report**

According to the existing 3GPP TS 38.212 Table 6.3.1.1.2-9, for a single CSI report, the configuration order of the CSI field in CSI Part 1 is 'CRI - RI - WB (wideband) CQI for the first TB - SB (subband) differential CQI for the first TB'. In the case of multi-CSI reporting, which is one CSI report for multiple sub-configurations, a new CSI field configuration method may be required when configuring the CSI report, because 'CRI - RI - WB CQI for the first TB - SB differential CQI for the first TB' information exists for each sub-configuration.

In the first method, CSI fields may be configured sequentially by sub-configurations that are triggered/activated to be included in the CSI report. This method may be expressed in the form of multiple repetitions of the CSI field configuration method of the existing single-CSI report described above, by mapping all CSI fields for one sub-configuration and then mapping the CSI fields of the next sub-configuration. For example, when multi-CSI reporting is triggered/enabled to include CSI information corresponding to sub-configurations #1, #2, and #3, 'CRI - RI - WB CQI for the first TB - SB differential CQI for the first TB for the first TB' of sub-configuration #1, then 'CRI - RI - WB CQI for the first TB - SB differential CQI for the first TB' of sub-configuration #2, and then finally 'CRI - RI - WB CQI for the first TB - SB differential CQI for the first TB' of sub-configuration #3 are sequentially mapped. In this case, the CSI field corresponding to which sub-configuration index is mapped first may be preconfigured/predefined. Alternatively, CSI fields may be mapped in ascending order from the lowest index or descending order from the highest index.

In the second method, the CSI fields may be configured by grouping identical CSI fields by sub-configurations that are triggered/activated to be included in the CSI report. This method collects CSI information for each sub-configuration for one CSI field and maps the CSI information all at once, then moves on to the next CSI field and collects and maps the corresponding CSI information for each sub-configuration again. For example, when multi-CSI reporting is triggered/enabled to include CSI information corresponding to sub-configurations #1, #2, and #3, this is a method of mapping CSI information corresponding to each sub-configuration for each CSI field, such as CRI of sub-configuration #1 - CRI of sub-configuration #2 - CRI of sub-configuration #3 - RI of sub-configuration #1 - RI of sub-configuration #2 - RI of sub-configuration #3 - ... In this case, the CSI field corresponding to which sub-configuration index is mapped first may be preconfigured/predefined. Alternatively, CSI fields may be mapped in ascending order from the lowest index or descending order from the highest index.

When information in a specific CSI field is common to sub-configurations, that CSI field may be included only once or may be configured compressed. For example, when the number of CSI-RS resources belonging to each sub-configuration is the same, and therefore the CRI is the same for each sub-configuration, or when CRI per sub-configuration is configured to be commonly reported or a rule is predefined, the CRI field may be configured as a CRI value for one sub-configuration rather than configured per sub-configuration. Therefore, in the first method example above, only the CRI field exists for sub-configuration #1, and the CRI field may be omitted for subsequent sub-configurations #2 and #3. In the second method example, the CRI field may be configured with the CRI value for sub-configuration #1, and then the CSI field may be configured per sub-configuration.

Characteristically, in Approach 3 above, when the CSI fields (CRI, RI, CQI, or the like) for the reference sub-configuration are included in CSI Part 1 and the CSI fields for the remaining sub-configurations are all included in CSI Part 2, if the RI value is different for each sub-configuration, the amount of CSI information, such as PMI, differs greatly depending on the RI value. Taking this into account, CSI Part 1 needs to include RI information for each sub-configuration such that information may be provided for the CSI Part 2 configuration. However, when the RI values of multiple sub-configurations included in the multi-CSI report are all the same, there is no problem in interpreting the CSI information of the remaining sub-configurations configured in CSI Part 2 even when only the RI value corresponding to the reference sub-configuration is included in CSI Part 1. Therefore, when the RI values of multiple sub-configurations to be included in a multi-CSI report are all the same, there is an advantage in that the CSI payload of CSI Part 1 may be reduced if only the RI value corresponding to the reference sub-configuration is included in CSI Part 1. That is, when the RI values are configured to be common for each sub-configuration or the corresponding constraints are applied, a method may be applied in which the CSI fields (CRI, RI, CQI, and the like) for the reference sub-configuration (e.g., the sub-configuration with the lowest or highest index) are configured in CSI Part 1 as in Approach 3 above, and the CSI fields for the remaining sub-configurations are all configured in CSI Part 2.

**[Method #4] CSI field mapping method when configuring CSI part 2 of a multi-CSI report containing CSI information corresponding to multiple sub-configurations**

According to 3GPP TS 38.212 Table 6.3.1.1.2-10, currently, for wideband, the CSI field is mapped in the order of 'WB CQI for the second TB - LI - WB PMI'. According to 3GPP TS 38.212 Table 6.3.1.1.2-11, for sub-bands, the CSI fields are mapped in the following order: 'Differential CQI for the second TB of all even sub-bands - SB PMI of even sub-bands - Differential CQI for the second TB of all odd sub-bands - SB PMI of odd sub-bands.'

When CSI Part 2 of a multi-CSI report for multiple sub-configurations is configured, the CSI fields may be configured sequentially for each sub-configuration triggered/activated to be included in the CSI report in the same manner as the CSI Part 1 configuration method of Method #3. This method may be expressed in the form of multiple repetitions of the CSI field configuration method of the existing single-CSI report described above, by mapping all CSI fields for one sub-configuration and then mapping the CSI fields of the next sub-configuration. Alternatively, 2) the CSI fields may be configured by grouping identical CSI fields by sub-configurations that are triggered/activated to be included in the CSI report. This method collects CSI information for each sub-configuration for one CSI field and maps the CSI information all at once, then moves on to the next CSI field and collects and maps the corresponding CSI information for each sub-configuration again.

When the number N of sub-configurations triggered/activated to be included in one CSI report is greater than or equal to a threshold, only CSI information for a specific number of sub-configurations may be included, and CSI Part 2 for the remaining sub-configurations may be omitted. This may reduce the payload size of CSI reports. For example, when N>2, only the sub-band CSI information (CQI/PMI) corresponding to two specific sub-configurations may be included in the CSI report, and all CSI information for the remaining sub-configurations may be omitted. In this case, the two sub-configurations that will configure the sub-band CSI information may be preconfigured, the two sub-configurations with the smallest/largest indices, or the two sub-configurations with the largest number of APs.

Alternatively, it may always include 4 blocks, 2 blocks may include CSI information for the reference sub-configuration, and the remaining 2 blocks may include the remaining sub-configuration(s). For example, when there are three sub-configurations configured to be included in a multi-CSI report, two blocks may be configured with even and odd sub-band CSI information of a reference sub-configuration (e.g., sub-configuration index #1), one block may be configured by collecting all even sub-band CSI information of the remaining two sub-configurations (e.g., sub-configuration indexes #2 and #3), and another block may be configured by collecting all odd-subband CSI information of the remaining two sub-configurations.

Specifically, when multi-CSI reporting is configured in an Access 2 (per sub-configuration) manner, CSI Part 2 information may be omitted for some sub-configurations (e.g., for sub-configurations to which only power-domain adaptation is applied or for sub-configurations in which the number of APs corresponds to 1).

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

Implementation example

FIG. 4 is a flowchart of a signal transmission and reception method according to embodiments of the present disclosure.

Referring to FIG. 4, embodiments of the present disclosure may be performed by a UE and may include receiving a CSI report configuration (S501), receiving a DCI for triggering a CSI report (S503), receiving a CSI-RS on a CSI-RS resource based on the CSI report configuration (S505), and transmitting a CSI report triggered by the DCI based on a measurement result for the CSI-RS (S507).

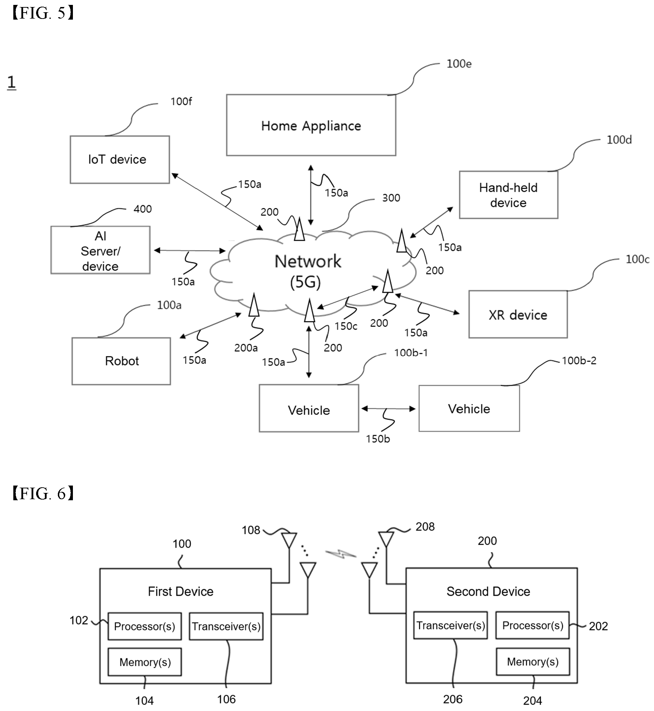

In addition to the operation of FIG. 5, one or more of the operations described in Section 1 may be additionally performed.

The CSI report configuration of FIG. 5 may be CSI-ReportConfig, which is an RRC parameter. CSI report configuration may include one or more CSI-RS resource set configurations. A single CSI-RS resource set configuration may include one or more CSI-RS resource configurations.

In a conventional NR system, one CSI report index (e.g., CSI report #n, where n is a positive integer) is assigned to one CSI-RS resource configuration. ABS in a conventional NR system may adjust the PDSCH transmission power based on the CQI in the CSI report of the UE. When the UE receives the CSI-RS transmitted by the BS, the UE calculates and reports the CQI based on the powerControlOffset parameter in the CSI-RS resource configuration, assuming that the PDSCH is power boosted or power reduced. A BS of a conventional NR system may indicate the number of APs assumed to derive CQI through nrofPorts in the RRC parameter CSI-RS-ResourceMapping. When the UE receives the CSI-RS transmitted by the BS, the UE assumes the number of APs based on the third parameter in the CSI-RS resource configuration, derives the CQI, and includes the derived CQI in the CSI report and transmits the information.

Referring to the description in Section 1, CSI-ReportConfig may contain L sub-configurations. Each sub-configuration may include parameters for changing assumptions about the power offset value and/or the number of APs for one CSI-RS resource configuration.

Referring to Method #1, CSI reports containing CSI information for some of the sub-configuration may be transmitted and received via DCI. The DCI may include information corresponding to one or more of the sub-configurations, and the UE may include CSI information for the corresponding sub-configurations in a CSI report and transmit the CSI information based on the information included in the received DCI. However, when the BS intends to receive CSI reports for all sub-configurations, the BS may not include information about any sub-configuration in the DCI. If the information included in the received DCI does not correspond to any of the configured sub-configurations, the UE may transmit CSI information for all sub-configurations by including them in the CSI report.

Referring to Method #1, a specific field included in the DCI (AP-CSI trigger state field or CSI request field) may indicate a code point. A single code point may be mapped to a single trigger state, and a trigger state may contain information about one or more sub-configurations. Mapping information may be received via RRC signaling or MAC CE.

For the CSI report to include CSI information for all sub-configurations, the trigger state mapped to the codepoint may need to be for multi-CSI reporting. Therefore, the values to be configured as code points may be divided into values for which the trigger state is for single-CSI reporting and values for which the trigger state is for multi-CSI reporting. Therefore, when the value indicated by the code point is for a single-CSI report and there is no sub-configuration corresponding to the corresponding value, the CSI report may not be performed.

When the bit length of a specific field is not sufficient, a mapping relationship between a code point and a trigger state is established through MAC CE, and thus whether a trigger state is for a single-CSI report or a multi-CSI report may be distinguished based on the mapping relationship established through MAC CE.

In addition to the operations described with respect to FIG. 4, one or more of the operations described with respect to FIGS. 1 to 3 and/or the operations described in section [1] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

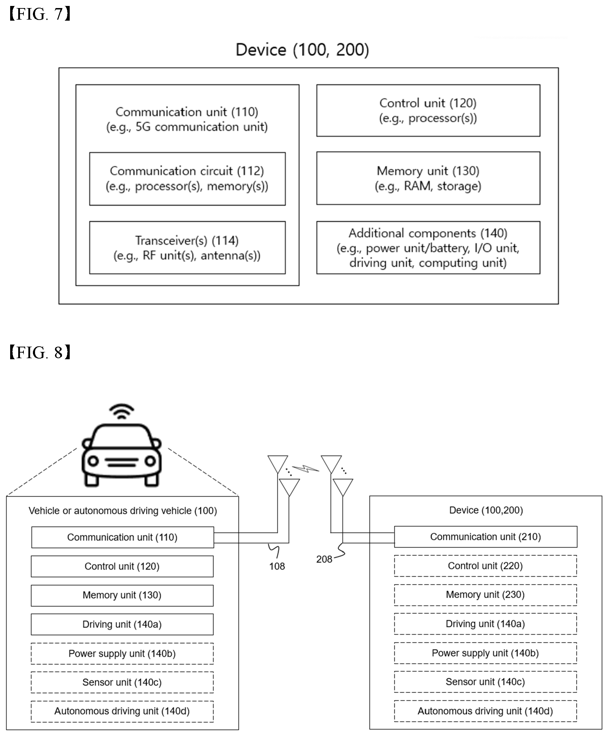

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

As described above, the present disclosure is applicable to various wireless communication systems.

**Claims**

1. A method of transmitting and receiving a signal by a user equipment (UE) in a wireless communication system, the method comprising:

   receiving a channel state information (CSI) report configuration;
   receiving downlink control information (DCI) for triggering a CSI report;
   receiving a CSI-reference signal (CSI-RS) on a CSI-RS resource based on the CSI report configuration; and
   transmitting the CSI report triggered by the DCI based on a measurement result for the CSI-RS,
   wherein the CSI report configuration includes sub-configurations,
   based on the DCI including information corresponding to one or more of the sub-configurations, the CSI report includes CSI information for the one or more sub-configurations, and
   based on the DCI not including information corresponding to any of the sub-configurations, the CSI report includes CSI information for all of the sub-configurations.

2. The method of claim 1, wherein the DCI indicates the one or more sub-configurations based on a code point of a specific field, and
   values to be the code point are divided into values for indicating a single-CSI report for one sub-configuration and values for indicating multi-CSI reports for a plurality of sub-configurations.

3. The method of claim 2, wherein, based on the code point being a first value for indicating the multi-CSI report and non-existence of sub-configuration corresponding to the first value, the CSI report includes CSI information for all of the sub-configurations.

4. The method of claim 2, wherein, based on the code point being a second value for indicating the single-CSI report and non-existence of sub-configuration corresponding to the second value, the CSI report is not performed.

5. The method of claim 2, wherein, based on a number of bits in the specific field, values for indicating single-CSI report and values for indicating multi-CSI reporting are distinguished through a medium access control (MAC) control element (CE).

6. A user equipment (UE) for transmitting and receiving a signal in a wireless communication system, the UE comprising:

   at least one transceiver;

at least one processor; and

at least one memory operably connected to the at least one processor and storing instructions that, when executed, cause the at least one processor to perform a specific operation,

wherein the specific operation includes:

receiving a channel state information (CSI) report configuration;

receiving downlink control information (DCI) for triggering a CSI report;

transmitting a CSI-reference signal (CSI-RS) on a CSI-RS resource based on the CSI report configuration; and

transmitting the CSI report triggered by the DCI based on a measurement result for the CSI-RS,

the CSI report configuration includes sub-configurations,

based on the DCI including information corresponding to one or more of the sub-configurations, the CSI report includes CSI information for the one or more sub-configurations, and

based on the DCI not including information corresponding to any of the sub-configurations, the CSI report includes CSI information for all of the sub-configurations.

7. The UE of claim 6, wherein the DCI indicates the one or more sub-configurations based on a code point of a specific field, and

values to be the code point are divided into values for indicating a single-CSI report for one sub-configuration and values for indicating multi-CSI reports for a plurality of sub-configurations.

8. The UE of claim 7, wherein, based on the code point being a first value for indicating the multi-CSI report and non-existence of sub-configuration corresponding to the first value, the CSI report includes CSI information for all of the sub-configurations.

9. The UE of claim 7, wherein, based on the code point being a second value for indicating the single-CSI report and non-existence of sub-configuration corresponding to the second value, the CSI report is not performed.

10. The UE of claim 7, wherein, based on a number of bits in the specific field, values for indicating single-CSI report and values for indicating multi-CSI reporting are distinguished through a medium access control (MAC) control element (CE).

11. An apparatus for a user equipment (UE), the apparatus comprising:

at least one processor; and

at least one memory operably connected to the at least one processor and configured to cause the at least one processor to perform an operation, wherein the operation includes:

receiving a channel state information (CSI) report configuration;

receiving downlink control information (DCI) for triggering a CSI report;

receiving a CSI-reference signal (CSI-RS) on a CSI-RS resource based on the CSI report configuration; and

transmitting the CSI report triggered by the DCI based on a measurement result for the CSI-RS,

the CSI report configuration includes sub-configurations,

based on the DCI including information corresponding to one or more of the sub-configurations, the CSI report includes CSI information for the one or more sub-configurations, and

based on the DCI not including information corresponding to any of the sub-configurations, the CSI report includes CSI information for all of the sub-configurations.

12. A computer-readable non-volatile storage medium comprising at least one computer program that causes at least one processor to perform an operation, the operation comprising:

receiving a channel state information (CSI) report configuration;

receiving downlink control information (DCI) for triggering a CSI report;

receiving a CSI-reference signal (CSI-RS) on a CSI-RS resource based on the CSI report configuration; and

transmitting the CSI report triggered by the DCI based on a measurement result for the CSI-RS,

wherein the CSI report configuration includes sub-configurations,

based on the DCI including information corresponding to one or more of the sub-configurations, the CSI report includes CSI information for the one or more sub-configurations, and

based on the DCI not including information corresponding to any of the sub-configurations, the CSI report includes CSI information for all of the sub-configurations.

13. A method of transmitting and receiving a signal by a base station (BS) in a wireless communication system, the method comprising:

transmitting a channel state information (CSI) report configuration;
transmitting downlink control information (DCI) for triggering a CSI report;
transmitting a CSI-reference signal (CSI-RS) on a CSI-RS resource based on the CSI report configuration; and
receiving the CSI report triggered by the DCI based on a measurement result for the CSI-RS,
wherein the CSI report configuration includes sub-configurations,
based on the DCI including information corresponding to one or more of the sub-configurations, the CSI report includes CSI information for the one or more sub-configurations, and
based on the DCI not including information corresponding to any of the sub-configurations, the CSI report includes CSI information for all of the sub-configurations.

14. A base station (BS) for transmitting and receiving a signal in a wireless communication system, the BS comprising:

at least one transceiver;
at least one processor; and
at least one memory operably connected to the at least one processor and storing instructions that, when executed, cause the at least one processor to perform a specific operation,
wherein the specific operation includes:

transmitting a channel state information (CSI) report configuration;
transmitting downlink control information (DCI) for triggering a CSI report;
transmitting a CSI-reference signal (CSI-RS) on a CSI-RS resource based on the CSI report configuration; and
receiving the CSI report triggered by the DCI based on a measurement result for the CSI-RS,
wherein the CSI report configuration includes sub-configurations,
based on the DCI including information for one or more of the sub-configurations, the CSI report includes CSI information for the one or more sub-configurations, and
based on the DCI not including information for any of the sub-configurations, the CSI report includes CSI information for all of the sub-configurations.

【FIG. 1】

【FIG. 2】

Resource grid

A carrier (up to 3300 subcarriers, i.e., 275 RBs)

A BWP

1 RB = 12 subcarriers

1 RE

1 subcarrier

1 symbol

k = 0

l = 0  · · · ·

【FIG. 3】

【FIG. 4】

【FIG. 5】

【FIG. 6】

【FIG. 7】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【FIG. 8】

Vehicle or autonomous driving vehicle (100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device (100,200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| | International application No. |
|---|---|
| | **PCT/KR2024/011908** |

| A. | CLASSIFICATION OF SUBJECT MATTER |
|---|---|

**H04B 7/06**(2006.01)i; **H04W 52/02**(2009.01)i; **H04B 7/08**(2006.01)i; **H04W 72/232**(2023.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 하위 보고(sub-report), 하위 설정(sub-configuration), DCI(downlink control information), 지시(indication)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0137959 A (VIVO MOBILE COMMUNICATION CO., LTD.) 12 October 2022 (2022-10-12)<br>See paragraphs [0052]-[0053]; and claims 1-2. | 1-14 |
| A | MODERATOR (HUAWEI). FL summary#4 for SD and PD adaptation for R18 NES. R1-2306033, 3GPP TSG-RAN WG1 Meeting #113. 25 May 2023.<br>See section 6. | 1-14 |
| A | LG ELECTRONICS. Discussion on NES techniques in spatial and power domains. R1-2305143, 3GPP TSG RAN WG1 #113. 15 May 2023.<br>See section 2. | 1-14 |
| A | HUAWEI et al. CSI enhancements for network energy saving. R1-2304644, 3GPP TSG-RAN WG1 Meeting #113. 15 May 2023.<br>See sections 2.2-2.3. | 1-14 |
| A | US 2023-0093335 A1 (TELEFONAKTIEBOLAGET LM ERICSSON (PUBL)) 23 March 2023 (2023-03-23)<br>See claims 1-13. | 1-14 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 November 2024** | **26 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011908**

| Patent document cited in search report | | | Publication date (day/month/year) | Patent family member(s) | | | Publication date (day/month/year) |
|---|---|---|---|---|---|---|---|
| KR | 10-2022-0137959 | A | 12 October 2022 | CN | 113259051 | A | 13 August 2021 |
| | | | | CN | 113259051 | B | 16 May 2023 |
| | | | | EP | 4106253 | A1 | 21 December 2022 |
| | | | | JP | 2023-513561 | A | 31 March 2023 |
| | | | | JP | 7549026 | B2 | 10 September 2024 |
| | | | | US | 2022-0376876 | A1 | 24 November 2022 |
| | | | | WO | 2021-160149 | A1 | 19 August 2021 |
| US | 2023-0093335 | A1 | 23 March 2023 | BR | 112018070089 | A2 | 05 February 2019 |
| | | | | CN | 109155693 | A | 04 January 2019 |
| | | | | CN | 109155693 | B | 19 July 2022 |
| | | | | EP | 3437224 | A1 | 06 February 2019 |
| | | | | EP | 3437224 | B1 | 25 January 2023 |
| | | | | JP | 2019-518350 | A | 27 June 2019 |
| | | | | JP | 6771582 | B2 | 21 October 2020 |
| | | | | US | 12040865 | B2 | 16 July 2024 |
| | | | | WO | 2017-168396 | A1 | 05 October 2017 |

Form PCT/ISA/210 (patent family annex) (July 2022)